# EUROPEAN PATENT APPLICATION

(11) **EP 1 787 693 A1**
(43) Date of publication of application: **23.05.2007**
(21) Application number: 06023110.7
(22) Date of filing: 07.11.2006
(51) Int. Cl.: A63C 11/22, F16B 7/10

(54) **Improved collapsible ski pole system**

(30) Priority: 17.11.2005 US 281653
(71) Applicant: Black Diamond Equipment AG, 4153 Reinach (CH)
(72) Inventor: Laakso, Thomas, Park City, UT 84098 (US); Hall, Jake, UT 84020 (US); Terry, Paul, Park City, UT 84098 (US); Stone, Ken, Salt Lake City, UT 84106 (US); Mellon, David, Park City, UT 84098 (US)
(74) Representative: Braun, André jr.

(57) **Abstract**

The present invention relates to a collapsible pole system (100). One embodiment of the present invention is directed at a collapsible ski pole with an improved locking system (130,150) that minimizes operational failures. The collapsible ski pole includes at least two pole segments (120,140,160) and a non-twisting locking mechanism (130,150) disposed between each of the corresponding pole segments. The pole segments are cross-sectionally shaped (320) to prevent rotation with respect to one another. Therefore, the non-twisting locking mechanisms cannot be misaligned or impeded as a result of the inadvertent twisting of the corresponding pole segments.

## Description

FIELD OF THE INVENTION

The invention generally relates to ski poles and trekking poles. In particular, the invention relates to a collapsible pole system.

BACKGROUND OF THE INVENTION

Poles are used for a variety of activities including skiing, trekking, hiking, snowshoeing, etc. The term ski pole is used interchangeably to refer to a pole that may be used for any purpose. Poles provide support for a user during particular activities. For example, hikers and trekkers commonly use poles to minimize knee impact by supporting a portion of their body weight on the poles rather than their legs. Likewise, skiers use poles for intermittent support and assistance in particular types of turns. In addition, traditional style cross-country skiers drive their poles downward to generate additional forward momentum. Poles are also used for various unconventional purposes such as supporting tents, marking accidents, operating a binding, etc.

Collapsible poles are capable of collapsing in size to facilitate efficient storage. Collapsible poles may also be adjusted to accommodate different terrain or differently sized users. For example, while traversing a steep slope it is often preferable to shorten the uphill pole to maintain balance. Most collapsible poles utilize a telescopic mechanism in which pole segments slide into one another so as to overlap. This overlapping of pole segments allows for lengthwise stability and adjustability of overall length. Collapsible poles generally include either two or three pole segments depending on their application. In addition, collapsible poles must include some form of locking mechanism between the pole segments to support the corresponding segments in a particular lengthwise position relative to one another. The majority of conventional poles use a twisting type locking mechanism that locks and unlocks corresponding pole segments by twisting them relative to one another in a clockwise or caunter-clockwise direction respectively. Unfortunately, these twisting locking mechanisms are easily jammed by debris or ice causing them to stick. An alternative to twisting locking mechanisms is non-twisting locking mechanisms that utilize a locking mechanism which does not require the corresponding pole segments to rotate with respect to one another. Unfortunately, non-twisting locking mechanism are also problematic in that the relative pole segments often inadvertently twist so as to misalign or impede the non-twisting locking mechanisms.

Therefore, there is a need in the industry for a collapsible pole system that overcomes the problems associated with conventional twisting and non-twisting type locking mechanisms.

SUMMARY

The present invention relates to a collapsible pole system. One embodiment of the present invention is directed at a collapsible ski pole with an improved locking system that minimizes operational failures. The collapsible ski pole includes at least two pole segments and a non-twisting locking mechanism disposed between each of the corresponding pole segments. The pole segments are cross-sectionally shaped to prevent rotation with respect to one another. Therefore, the non-twisting locking mechanisms cannot be misaligned or impeded as a result of the inadvertent twisting of the corresponding pole segments.

These and other features and advantages of the present invention will be set forth or will become more fully apparent in the description that follows and in the appended claims. The features and advantages may be realized and obtained by means of the instruments and combinations particularly pointed out in the appended claims. Furthermore, the features and advantages of the invention may be learned by the practice of the invention or will be obvious from the description, as set forth hereinafter.

BRIEF DESCRIPTION OF THE DRAWINGS

In order that the manner in which the above-recited and other advantages and features of the invention are obtained, a more particular description of the invention briefly described above will be rendered by reference to specific embodiments thereof which are illustrated in the appended drawings. Understanding that these drawings depict only typical embodiments of the invention and are not therefore to be considered limiting of its scope, the invention will be described and explained with additional specificity and detail through the use of the accompanying drawings in which:

Figure 1A illustrates a profile view of a collapsible ski pole in accordance with one embodiment of the present invention in an extended position;

Figure 1B illustrates a profile view of the collapsible ski pole illustrated in Figure 1A in a collapsed position;

Figure 2A illustrates a cross-sectional view of the cross-sectional shape of the top pole segment illustrated in Figure 1B along the lines A-A';

Figure 2B illustrates a cross-sectional view of an alternative embodiment of the cross-sectional shape of the top pole segment illustrated in Figure 1B along the lines A-A';

Figure 2C illustrates a cross-sectional view of an alternative embodiment of the cross-sectional shape of the top pole segment illustrated in Figure 1B along the lines A-A'; ,

Figure 2D illustrates a cross-sectional view of an alternative embodiment of the cross-sectional shape of the top pole segment illustrated in Figure 1B along the lines A-A';

Figure 3A illustrates a profile view of the non-twisting locking mechanism illustrated in Figure 1A and 1B; and

Figure 3B illustrates an elevational operation view of the non-twisting locking mechanism illustrated in Figures 1A and 1B, in a locked configuration.

DETAILED DESCRIPTION OF THE INVENTION

The present invention relates to a collapsible pole system. One embodiment of the present invention is directed at a collapsible ski pole with an improved locking system that minimizes operational failures. The collapsible ski pole includes at least two pole segments and a non-twisting locking mechanism disposed between each of the corresponding pole segments. The pole segments are cross-sectionally shaped to prevent rotation with respect to one another. Therefore, the non-twisting locking mechanisms cannot be misaligned or impeded as a result of the inadvertent twisting of the corresponding pole segments. Also, while embodiments of the present invention are directed at ski poles and trekking poles, it will be appreciated that the teachings of the present invention could be applied to other areas.

The following terms are defined as follows:

Ski pole - a pole which can be used for any purpose including skiing, snowshoeing, hiking, walking, trekking, backpacking, etc.

Direction of use -a poles direction of use is a perpendicular pole direction that is intended to align with the forward movement of a user. The direction of use is generally defined by the curvature of the handle.

Bending axis- the bending axis of a pole segment is a direction perpendicular to the longest dimension of the pole. Certain poles may have strong and weak bending axis depending on the cross-sectional shape of the pole segments.

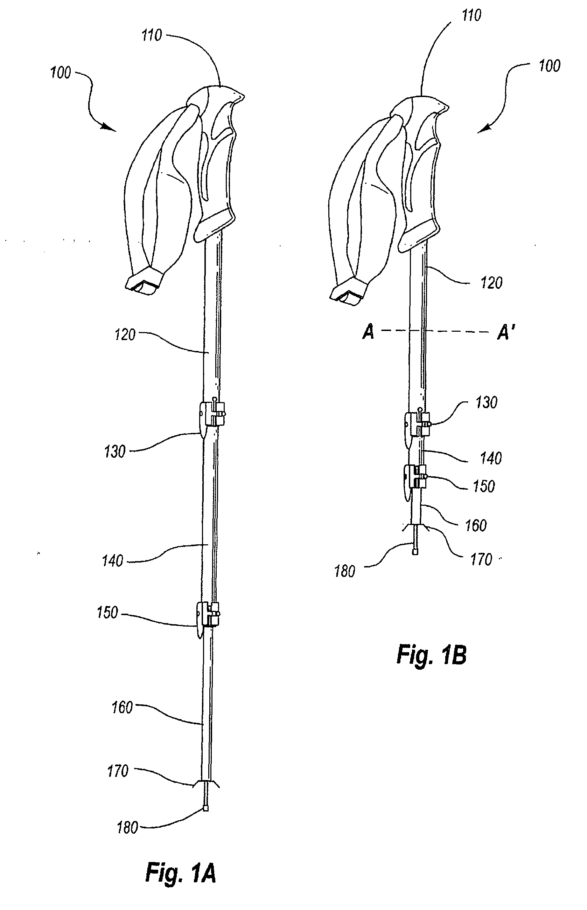

Reference is initially made to Figures 1A and 1B, which illustrate one embodiment of a collapsible ski pole in accordance with the present invention, designated generally at 100. The pole 100 includes a handle 110, a top pole segment 120, a top locking mechanism 130, a middle pole segment 140, a lower locking mechanism 150, a bottom pole segment 160, a basket 170, and a spike 180. The handle 110 is shaped to receive the hand of a user. In addition, the handle is rotationally oriented with respect to the pole segments 120, 140, 160 in a particular direction to maximize the strength properties of the pole segments 120, 140, 160. Since the pole segments 120, 140, 160 are cross-sectionally shaped to prevent rotation, they inherently contain strong and weak perpendicular axis. Traditional cross-sectionally shaped round pole segments have the same strength in all perpendicular directions because of the inherent properties of elongated round objects. However, to prevent rotation between the pole segments 120, 140, 160 in the illustrated embodiment, the cross-sectional shape is non-rounded thereby introducing weak bending axis. In order to overcome this problem, the pole 100 is configured such that the strong bending axis are oriented in the perpendicular directions which are most likely to receive bending forces. Since poles are generally used to provide support for forward movement, it is the forward and backward orientations of the pole that are likely to receive the most bending forces. The handle 110 is therefore oriented to create a direction of use that encourages the user to properly align the forward movement with the strong bending axis of the pole segments 120, 140, 160. The handle 110 is fixably coupled to the top pole segment 120 via an overlapping recess bonded with some form of bonding agent.

The pole segments 120, 140, 160 are also oriented with respect to one another in a manner that allows them to telescopically collapse and extend with respect to one another. Since they are cross-sectionally shaped to prevent rotation, this corresponding alignment is critical to ensure operability. As with conventional collapsible poles, the pole segments 120, 140, 160 each have a slighter larger or smaller cross-sectional dimension so as to allow overlapping with one another. Various tapers may be used to prevent the pole segments 120, 140, 160 from overlapping one another to a degree that is undesirable. Likewise, various well known techniques may be used to minimize the ability of the pole segments from becoming disengaged from one another.

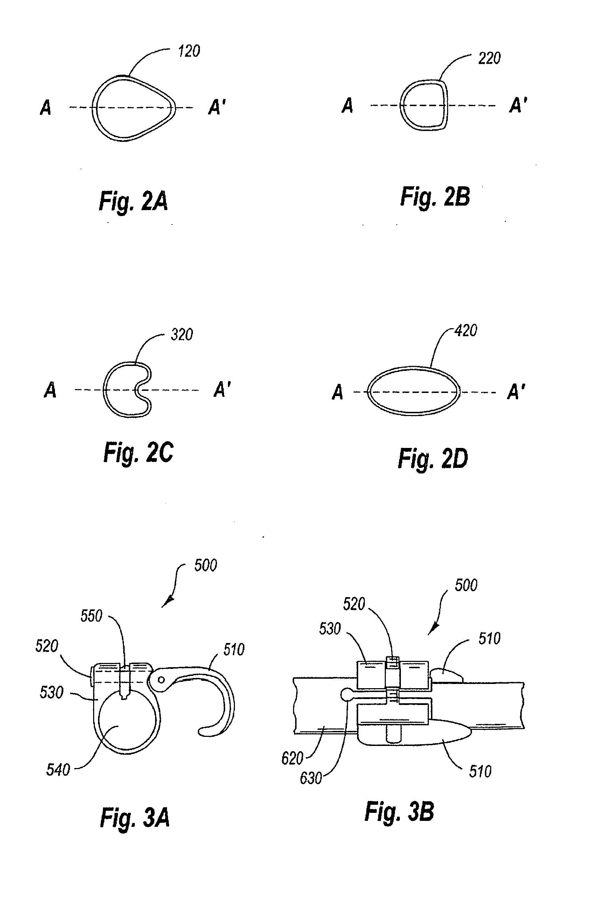

The non-twisting locking mechanisms 130, 150 are disposed at the slidable coupling points between the pole segments 120, 140, 160. The slidable coupling point is generally the location at which one pole segment overlaps another. Therefore, the end of the exterior pole segment or slightly larger cross-sectional pole segment will be included as part of the slidable coupling point. A portion of the interior pole segment or slightly smaller cross-sectional pole segment will also be included as part of the slidable coupling point. The illustrated non-twisting locking mechanisms 130, 150 will be described in more detail with reference to Figures 3A and 3B. It should be noted that any type of non-twisting locking mechanism may be used and remain consistent with the present invention. Non-twisting locking mechanisms include but are not limited to cam-assistant compression systems, pin-hole systems, etc.

The basket 170 and spike 180 are disposed at the bottom of the pole 100. Various basket and spike configurations may be used and remain consistent with the present invention. For example, poles configured for hiking are often equipped with small radius baskets in comparison to poles that are configured for skiing or snowshoeing. Likewise, the spike 180 dimensions may be different depending on the nature of the pole. In general, the spike 180 and/or basket 170 are used to provide a contact region between the pole 100 and the surface over which a user is traveling. For example, on rocky surfaces only the spike 180 will contact the rock whereas in snow, the spike 180 will likely penetrate the snow a certain distance such that the enlarged dimension of the basket 170 is able to contact the snow.

Reference is next made to Figures 2A - 2D, which illustrate various embodiments of cross-sectional pole segment shapes consistent with the collapsible poles of the present invention. The illustrated cross-sectional pole shapes must generally be applied to all of the pole segments on a particular collapsible pole such that the pole segments are allowed to slide in and out of one another. As described above, it is necessary for corresponding pole segments to be cross-sectionally shaped slightly larger or smaller than one another to facilitate overlapping. The illustrated cross-sectional pole segment shapes in Figures 2A - 2D will prevent pole rotation. It should be noted that many other cross-sectional rotation prevention shapes may used and remain consistent with the present invention.

The cross-sectional views illustrated in Figures 2A-2D are oriented in a manner to correspond to the top pole segment 120 in Figure 2B. The line A-A' defines the back-front axis of travel of the pole segment. Therefore, the strong bending axis of the particular cross-section pole segment shapes are oriented to align with the line A-A'. For example, the teardrop shape illustrated in Figure 2A is oriented such that the top and bottom of the teardrop shape are aligned with the line A-A'. Likewise, the ovalized shape illustrated in Figure 2D is oriented such that the narrow sides are oriented with the line A-A'. The non-linear shapes illustrated in Figures 2B and 2C are also similiarly oriented such that the regions of non-linearity are aligned with the line A-A'.

Reference is next made to Figures 3A-3B, which illustrate one type of non-twisting locking mechanism consistent with the present invention, designated generally at 500. The locking mechanism 500 may be generally referred to as a cam-operated clamping mechanism. As illustrated in Figure 3B, the locking mechanism 500 is disposed at the slidable coupling point between two corresponding pole segments as illustrated in Figures 1A and 1B. The illustrated exterior pole segment 620 includes a compression recess or notch 630 which allows for it's cross sectional shape to be temporarily altered in response to a clamping force. The illustrated interior pole segment 630 is slidably engaged into the exterior pole segment 620.

The mechanism includes a lever 510 coupled to a clamp 530 via a pin 520. The clamp defines an interior region 540 disposed over the notch 630 of the exterior pole segment 620, as illustrated. The clamp 530 is specifically shaped such that when it is rotated or clamped toward the clamp 530, the pin 520 and lever 510 cause the clamp 530 to reduce the dimension of the interior region 540 which in turn causes a compression on the notch 630. The compression of the notch 630 thereby causes the cross-sectional shape of the exterior pole segment 620 to reduce effectively impeding the slidable coupling between the exterior pole segment 620 and the interior pole segment 630.

Thus, as discussed herein, the present invention relates to ski poles and trekking poles. In particular, the invention relates to a collapsible pole system. The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A collapsible ski pole comprising:
at least two shaft segments, wherein the shaft segments are slidably engaged with one another such that they can be extended and collapsed along a particular distance with respect to one another;
at least one non-twisting releasable locking mechanism disposed at a slidable coupling point between the at least two shaft segments, wherein the at least one non-twisting releasable locking mechanism is configured to releasably lock the shaft segments relative to one another along the particular distance; and
wherein the at least two shaft segments are cross-sectionally shaped to prevent rotation with respect to one another.

2. The collapsible ski pole of claim 1, wherein the at least two shaft segments includes three shaft segments and wherein a non-twisting releasable locking mechanism is disposed at a slidable coupling point between the first and second shaft segments and the second and third shaft segments.

3. The collapsible ski pole of claim 1, wherein the at least two shaft segments are cross-sectionally shaped in a non-circular shape.

4. The collapsible ski pole of claim 1, wherein the at least one non-twisting releasable locking mechanism utilizes a compression system to releasably lock the corresponding shaft segments with respect to one another.

5. The collapsible ski pole of claim 4, wherein the compression system includes a camming action to create a sufficient compression force to lock the corresponding shaft segments with respect to one another.

6. The collapsible ski pole of claim 1, wherein the at least one non-twisting releasable locking mechanism utilizes a pin system to releasably lock the corresponding shaft segments with respect to one another.

7. The collapsible ski pole of claim 1, wherein the shaft segments are composed of carbon fiber.

8. The collapsible ski pole of claim 1, wherein the at least two shaft segments are cross-sectionally shaped in a non-circular shape that includes a weak bending axis and a strong bending axis, and wherein the at least two shaft segments are oriented such that the weak axis is substantially normal to a direction of use.

9. The collapsible ski pole of claim 1, wherein one of the at least two shaft segments is coupled to a handle and another of the at least two shaft segments is coupled to a spike.

10. A collapsible ski pole comprising:
at least two overlapping shaft segments, wherein the shaft segments are slidably engaged in an overlapping manner with one another such that they can be extended and collapsed along a particular distance with respect to one another;
a non-twisting releasable locking mechanism disposed at a slidable coupling point between two of the at least two overlapping shaft segments, wherein the non-twisting releasable locking mechanism is configured to releasably lock the overlapping shaft segments relative to one another along the particular distance; and
wherein the at least two overlapping shaft segments are cross-sectionally shaped to prevent rotation with respect to one another.

11. The collapsible ski pole of claim 9, wherein the at least two shaft segments includes three shaft segments and wherein a non-twisting releasable locking mechanism is disposed at a slidable coupling point between the first and second shaft segments and the second and third shaft segments.

12. The collapsible ski pole of claim 9, wherein the at least two shaft segments are cross-sectionally shaped in a non-circular shape.

13. The collapsible ski pole of claim 9, wherein the at least one non-twisting releasable locking mechanism utilizes a compression system to releasably lock the corresponding shaft segments with respect to one another.

14. The collapsible ski pole of claim 9, wherein the at least one non-twisting releasable locking mechanism utilizes a pin system to releasably lock the corresponding shaft segments with respect to one another.

15. The collapsible ski pole of claim 9, wherein the shaft segments are composed of carbon fiber.

16. The collapsible ski pole of claim 9, wherein the at least two shaft segments are cross-sectionally shaped in a non-circular shape that includes a weak bending axis and a strong bending axis, and wherein the at least two shaft segments are oriented such that the weak axis is substantially normal to a direction of use.

17. The collapsible ski pole of claim 9, wherein one of the at least two shaft segments is coupled to a handle and another of the at least two shaft segments is coupled to a spike.

18. A method of releasably locking a collapsible pole into a particular length comprising the acts of:
extending at least two overlapping slidably engaged shaft segments away from one another, wherein the at least two shaft segments are cross-sectionally shaped to prevent rotation with respect to one another; and
engaging a non-twisting releasable locking mechanism between the at least two shaft segments to releasably secure the at least two shaft segments at a particular overlapping orientation with respect to one another.

19. The method of claim 17, wherein the non-twisting releasable locking mechanism utilizes a compression system to releasably lock the corresponding shaft segments with respect to one another.

20. The method of claim 17, wherein the non-twisting releasable locking mechanism utilizes a pin system to releasably lock the corresponding shaft segments with respect to one another.

21. The method of claim 17, wherein the shaft segments are oriented such that their strong bending axis is aligned with a direction of use.
